Europäisches Patentamt

European Patent Office

Office européen des brevets

(11) Numéro de publication: **0 320 396**
**A1**

## (12) DEMANDE DE BREVET EUROPEEN

(21) Numéro de dépôt: **88403129.5**

(22) Date de dépôt: **09.12.88**

(51) Int. Cl.⁴: **B 23 B 51/10**

(30) Priorité: **11.12.87 FR 8717280**

(43) Date de publication de la demande:
**14.06.89 Bulletin 89/24**

(84) Etats contractants désignés:
**DE ES FR GB IT SE**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Chéronneau, Gérard**
**13, rue de Waldsassen**
**F-91460 Marcousis (FR)**

**Dussel, Patrick**
**46, rue de Paris**
**F-95130 Franconville (FR)**

**Halcewicz, Norbert**
**6, rue Champagne**
**F-92140 Clamart (FR)**

(54) Fraise double pour le ragréage d'électrodes de soudage.

(57) Fraise double pour le ragréage d'électrodes de soudage polluées par des tôles revêtues. Suivant l'invention, elle est constituée par une première partie de coupe centrale (2) logée à l'intérieur d'une seconde partie de support (4), d'une part, et cette partie centrale (2) comporte deux faces de coupe (6, 8), d'autre part.

Application : notamment à la remise en état d'électrodes de soudage polluées.

FIG. 3

EP 0 320 396 A1

## Description

## FRAISE DOUBLE POUR LE RAGREAGE D'ELECTRODES DE SOUDAGE

La présente invention se rapporte à une fraise dite double pour la remise en état d'électrodes de soudage polluées par des tôles revêtues notamment par galvanisation et électrozingage.

Ces tôles utilisées pour la protection contre la corrosion ont ainsi engendré des problèmes de soudabilité dus essentiellement à la pollution des faces actives des électrodes. Avec une électrode à téton, il s'avère courant de réaliser cent fois moins de points de soudure sur des tôles revêtues que sur des tôles non revêtues (par exemple 500 au lieu de 50 000) avec une montée plus accentuée du courant électrique correspondant à une dégradation plus rapide de la face active de cette électrode.

Des échanges successifs de jeux d'électrodes deviennent fortement pénalisants sur un site robotisé, ce qui rend impérative la nécessité d'automatiser la remise en état des électrodes (faces actives) notamment par le biais d'une fraise.

L'invention a ainsi pour objet une fraise double qui comprend, suivant une particularité essentielle, une première partie de coupe centrale, logée à l'intérieur d'une second partie de support, d'une part, et dont la partie centrale présente deux faces de coupe, d'autre part.

Les deux faces de coupe permettent de réduire de moitié le temps de cycle (ragréage) d'un jeu d'électrodes, et de simplifier les trajectoires de robot.

La pièce d'usure constituée par la partie de coupe centrale (forme simple de la fraise double) permet ainsi d'obtenir une pièce moulée à un coût minimal en grande série.

D'autres particularités et avantages de l'invention ressortiront plus clairement de la description qui suit, d'un mode de réalisation préféré, donné à titre d'exemple non limitatif en référence des dessins annexés dans lesquels :

- la figure 1 représente une vue en bout de cette fraise double qui montre sa face inférieure,

- la figure 2 représente une vue en bout de cette fraise double qui montre sa face supérieure,

- la figure 3 représente une vue en perspective de la partie centrale de cette fraise,

- et la figure 4 représente une vue schématique d'un ensemble de montage pour le ragréage d'électrodes au moyen de cette fraise.

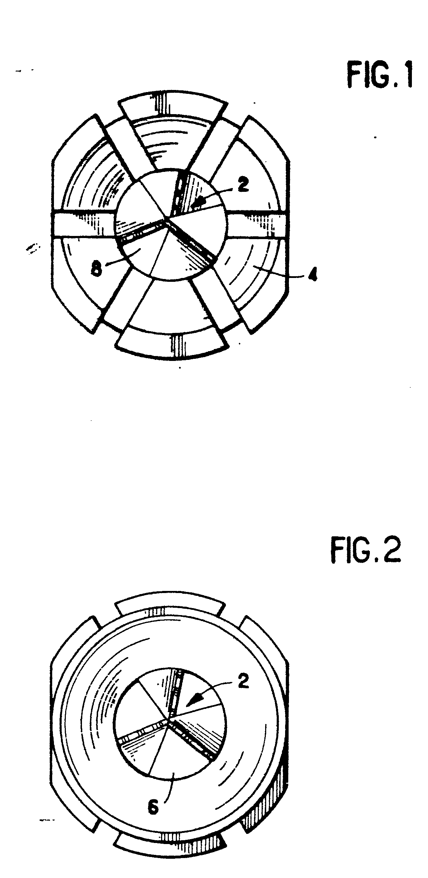

Comme le montrent les figures 1, 2 et 3, cette fraise double présente une première partie de coupe centrale 2 logée à l'intérieur d'une seconde partie de support 4. Cette partie de coupe centrale comporte deux faces de coupe 6, 8. Sur chacune de celle-ci, sont visibles trois couteaux équidistants à 120°. Ces trois couteaux fournissent trois points d'appui à l'électrode, stabilisent et autocentrent celle-ci sur la fraise.

Sur chaque face de coupe, un (10) des trois couteaux dépasse l'axe de la fraise pour permettre l'usinage de la partie centrale de l'électrode.

Les trois zones de chaque face de coupe qui séparent les couteaux présentent chacune un même rayon sphérique pour répondre à deux impératifs :
- centrer l'électrode à dresser,
- et redonner à celle-ci sa forme d'origine.

Les angles de coupe $\alpha$ d'une face de coupe sont régulièrement décalés de 60° par rapport à ceux de l'autre face de coupe.

Ce décalage permet de répartir l'effort de serrage de la pince de soudage 0 et de multiplier les points d'appui.

Deux vés d'indexage 14, 16 à 90° sont prévus sur le corps de la partie centrale de coupe 2. L'effort résultant de deux vis point à 90° dans ces vés stabilise la fraise en trois points dans son support en réalisant un indexage en rotation et un autre en translation.

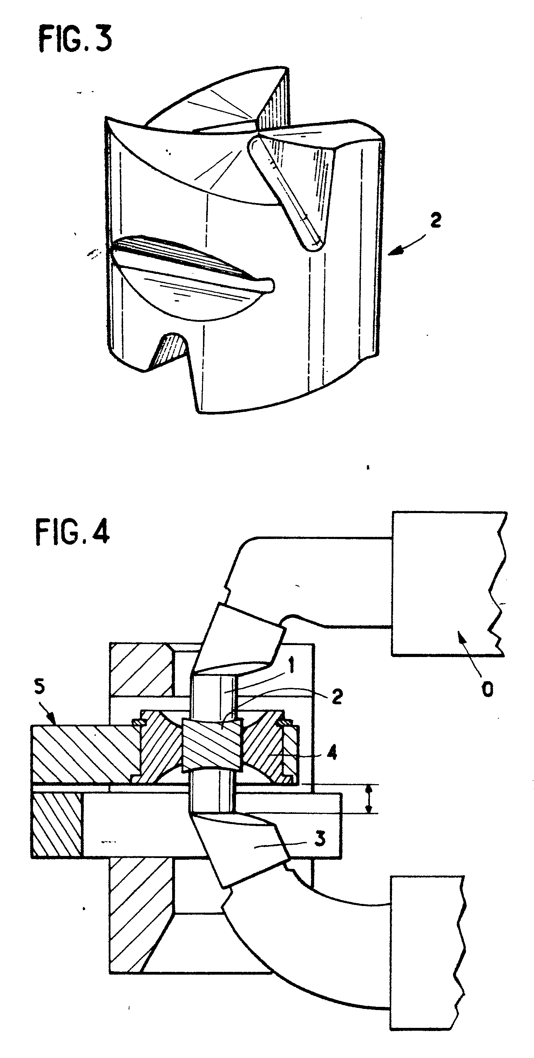

Comme illustré sur la figure 4, les électrodes 1 montées sur une pince de soudage 0 viennent se fermer sur la partie centrale de coupe 2 elle-même entraînée en rotation par son support 4 au moyen d'un système d'engrenages intégré à un outil pneumatique 5.

## Revendications

1 - Fraise double pour le ragréage d'électrodes de soudage polluées par des tôles revêtues, caractérisée en ce qu'elle est constituée par une première partie de coupe centrale (2) logée à l'intérieur d'une seconde partie de support (4), d'une part, et en ce que cette partie centrale (2) comporte deux faces de coupe (6, 8), d'autre part.

2- Fraise double suivant la revendication 1, caractérisée par :
- deux faces de coupe (6, 8),
- trois angles de coupe ($\alpha$) équidistants à 120° par face,
- un couteau (10) par face dépassant le centre,
- un rayon sphérique (12) sur chaque face,
- un décalage des angles de coupe entre faces de 60°,
- et deux vés d'indexage (14, 16) à 90°.

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 589 767 (PEUGEOT & CITROEN)<br>* Page 3, lignes 5-13; figures 2,4 *<br>--- | 1,2 | B 23 B 51/10 |
| A | FR-A-2 120 290 (MASSON)<br>--- | 2 | |
| A | FR-A-1 077 766 (MASSON)<br>--- | | |
| A | GB-A-1 189 104 (LUCAS)<br>--- | | |
| A | GB-A- 524 348 (BASEBE)<br>--- | | |
| A | PATENT ABSTRACTS OF JAPAN, vol. 10, no. 151 (M-483)[2208], 31 mai 1986, page 55 M 483; & JP-A-61 4618 (NORIYUKI YOKOTA) 10-01-1986<br>----- | | |

| DOMAINES TECHNIQUES RECHERCHES (Int. Cl.4) |
|---|
| B 23 B 51/00 |

**Le présent rapport a été établi pour toutes les revendications**

| Lieu de la recherche | Date d'achèvement de la recherche | Examinateur |
|---|---|---|
| LA HAYE | 08-03-1989 | BOGAERT F.L. |